(19) **Europäisches Patentamt**

**European Patent Office**

**Office européen des brevets**

(11) **EP 0 933 574 B1**

(12) **FASCICULE DE BREVET EUROPEEN**

(45) Date de publication et mention
de la délivrance du brevet:
**02.01.2004 Bulletin 2004/01**

(51) Int Cl.⁷: **F16K 47/02**

(21) Numéro de dépôt: **99420024.4**

(22) Date de dépôt: **28.01.1999**

(54) **Réducteur de pression pour circuit hydraulique**

Druckminderer für Hydraulikanlagen

Pressure reducing valve for a hydraulic circuit

(84) Etats contractants désignés:
**AT BE CH DE FI FR GB IE IT LI NL SE**

(30) Priorité: **30.01.1998 FR 9801318**

(43) Date de publication de la demande:
**04.08.1999 Bulletin 1999/31**

(73) Titulaire: **Desbordes**
**69100 Villeurbanne (FR)**

(72) Inventeur: **Gential, Réne Louis**
**69100 Villeurbanne (FR)**

(74) Mandataire: **Myon, Gérard Jean-Pierre et al**
**Cabinet Lavoix Lyon**
**62, rue de Bonnel**
**69448 Lyon Cedex 03 (FR)**

(56) Documents cités:
**EP-A- 0 311 573**      **EP-A- 0 612 005**
**DE-A- 1 919 731**      **DE-A- 2 038 051**
**DE-A- 2 257 196**      **DE-B- 1 067 653**
**US-A- 2 135 670**

## Description

L'invention a trait à un réducteur de pression pour circuit hydraulique.

Un réducteur de pression est classiquement utilisé dans les réseaux de distribution d'eau potable afin de limiter la pression de chaque installation domestique ou industrielle et d'éviter ainsi une trop forte sollicitation mécanique ou hydraulique des conduites, des robinets et des appareils ménagers branchés sur cette installation. Les réducteurs de pression de l'art antérieur, tels que connus notamment de EP-A-0 612 005, présentent l'inconvénient notable de générer un bruit non négligeable au passage de l'eau, ce bruit ayant tendance à se propager dans les conduites vers l'aval et vers l'amont. Il arrive ainsi, notamment dans les immeubles d'habitation, que le soutirage d'eau dans une installation domestique génère un bruit gênant pour le voisinage.

Ce bruit peut être dû à des phénomènes de cavitation qui prennent naissance dans les zones de vitesse élevée du flux d'eau à l'intérieur du réducteur de pression.

On a pu envisager, comme par exemple dans DE-A-19 19 731, de disposer, dans une soupage et sur le trajet du flux, un filtre ou une chicane destiné à ralentir l'écoulement. Ce filtre ou cette chicane s'encrasse relativement rapidement, alors qu'un réducteur de pression est installé dans une installation pour plusieurs dizaines d'années. Lorsque le filtre ou la chicane est encrassé, il ne remplit plus correctement sa fonction et peut même diminuer sensiblement la section d'écoulement du réducteur.

C'est à ces inconvénients qu'entend plus particulièrement remédier l'invention en proposant un réducteur de pression, dont les performances acoustiques sont sensiblement améliorées par rapport à l'art antérieur et dont le fonctionnement au cours du temps est stable, c'est-à-dire qui ne risque pas de voir ses performances diminuées du fait d'un encrassement.

Dans cet esprit, l'invention concerne un réducteur de pression pour circuit hydraulique, qui comprend un équipage mobile portant un clapet apte à être déplacé selon une direction axiale en regard d'un orifice de sortie d'un conduit d'admission,
caractérisé en ce qu'une surface périphérique de l'équipage mobile, qui s'étend radialement autour du clapet, est pourvue de moyens disposés au voisinage de cette surface et prévus pour être léchés par le flux de liquide pour la stabilisation et le ralentissement du flux de liquide au voisinage de cette surface périphérique.

Grâce à l'invention, les moyens de stabilisation et de ralentissement du flux de liquide au voisinage de la surface périphérique permettent de modifier la répartition des vitesses en diminuant la vitesse de l'eau qui lèche ces moyens de stabilisation et de ralentissement, cette vitesse étant relativement élevée dans les phases transitoires d'ouverture et de fermeture du clapet, c'est-à-dire lorsque la section d'écoulement est minimale. Dans les conditions normales d'utilisation, la relation entre la pression (P) et la vitesse (V) du fluide en cours d'écoulement peut être exprimée par une équation de Bernoulli, à savoir :

$$P/\pi + V^2/2g = \text{constante}$$

Ainsi, une diminution de la vitesse d'écoulement du flux de liquide, au voisinage de la surface périphérique entourant le clapet et au plus près de la zone critique où la section de passage est la plus réduite, induit une augmentation de la pression de ce fluide en cours d'écoulement et une diminution des risques de cavitation. En d'autres termes, la partie du flux de liquide qui lèche la surface périphérique de l'équipage mobile a une vitesse réduite, voire nulle, ce qui confère au profil de vitesse un "effet quasi-laminaire" dans toutes les conditions d'utilisation, y compris dans les phases transitoires dans lesquelles le clapet est très proche de l'orifice de sortie du conduit interne du réducteur. Le fait que les moyens de stabilisation et de ralentissement du flux de liquide sont disposés au voisinage de la surface périphérique induit qu'ils sont en permanence léchés par le fluide qui s'écoule et non pas seulement traversés par celui-ci, ce qui évite tout danger d'encrassement de ces moyens de stabilisation et de ralentissement. La durée de vie d'un régulateur conforme à l'invention est ainsi adaptée à son utilisation prévue.

Selon un premier aspect avantageux de l'invention, les moyens de stabilisation et de ralentissement du flux comprennent une structure en treillis disposée de façon substantiellement parallèle à la surface périphérique. Cette structure en treillis constitue en frein efficace à l'écoulement du flux. Dans ce cas, on peut prévoir que la structure en treillis comprend une zone annulaire substantiellement parallèle à la surface périphérique. On peut également prévoir que cette structure en treillis est formée de bandes s'étendant radialement à partir du clapet.

Selon une autre variante de l'invention, la structure en treillis est formée d'au moins deux couches superposées.

Selon un autre aspect avantageux de l'invention correspondant à un autre mode de réalisation, les moyens de stabilisation et de ralentissement du flux comprennent des fils s'étendant radialement à partir du clapet, ces fils étant disposés de façon substantiellement parallèle à la surface périphérique de l'équipage mobile. Il s'est avéré que ces fils constituent un moyen de ralentissement et de guidage efficace du flux liquide, alors qu'ils procèdent d'une structure particulièrement simple à mettre en oeuvre.

Selon un autre mode de réalisation, les moyens de stabilisation et de ralentissement du flux de liquide comprenant une bande disposée à plat sur la surface périphérique et portant des fils, poils, picots ou doigts orientés selon une direction globalement perpendiculaire à cette surface.

Selon un aspect particulièrement avantageux de l'invention, la structure en treillis, les fils ou la bande sont immobilisés par coincement entre le clapet et un porte-clapet de l'équipage mobile. Cet aspect de l'invention permet une mise en oeuvre particulièrement aisée de l'invention et autorise son incorporation dans des réducteurs de pression classiques équipés d'un équipage mobile portant un clapet. Dans ce cas, on peut également prévoir que la structure en treillis ou les fils comprend ou comprennent une partie qui s'étend dans un logement sous toute la largeur du clapet.

Selon un autre mode de réalisation avantageux de l'invention, les moyens de stabilisation et de ralentissement comprennent des rainures formées sur la surface périphérique. Ce mode de réalisation de l'invention est particulièrement simple à mettre en oeuvre et ne nécessite pas l'ajout d'éléments supplémentaires par rapport aux dispositifs classiques. Dans ce cas, on peut prévoir que les rainures sont obtenues par moletage, fraisage, formage ou matriçage de cette surface périphérique ou directement par moulage.

L'invention sera mieux comprise et d'autres avantages de celle-ci apparaîtront plus clairement à la lumière de la description qui va suivre de cinq modes de réalisation d'un réducteur de pression conforme à l'invention, donnée uniquement à titre d'exemple et faite en référence aux dessins annexés dans lesquels :

- la figure 1 est une coupe axiale d'un réducteur de pression conforme à un premier mode de réalisation de l'invention ;
- la figure 2 est une vue à plus grande échelle du détail II à la figure 1 ;
- la figure 3 est une vue en perspective éclatée d'une partie de l'équipage mobile du réducteur de la figure 1 et des éléments qu'il supporte ;
- la figure 4 est une vue en perspective analogue à la figure 3, le dispositif étant monté ;
- la figure 5 est une vue analogue à la figure 4, pour un réducteur conforme à un second mode de réalisation de l'invention ;
- la figure 6 est une coupe selon la ligne VI-VI à la figure 5 ;
- la figure 7 est une vue analogue à la figure 4 pour un réducteur de pression conforme à un troisième mode de réalisation conforme de l'invention ;
- la figure 8 est une vue analogue à la figure 4 pour un réducteur de pression conforme à un quatrième mode de réalisation de l'invention et
- la figure 9 est une vue analogue à la figure 4 pour un réducteur de pression conforme à un cinquième mode de réalisation de l'invention.

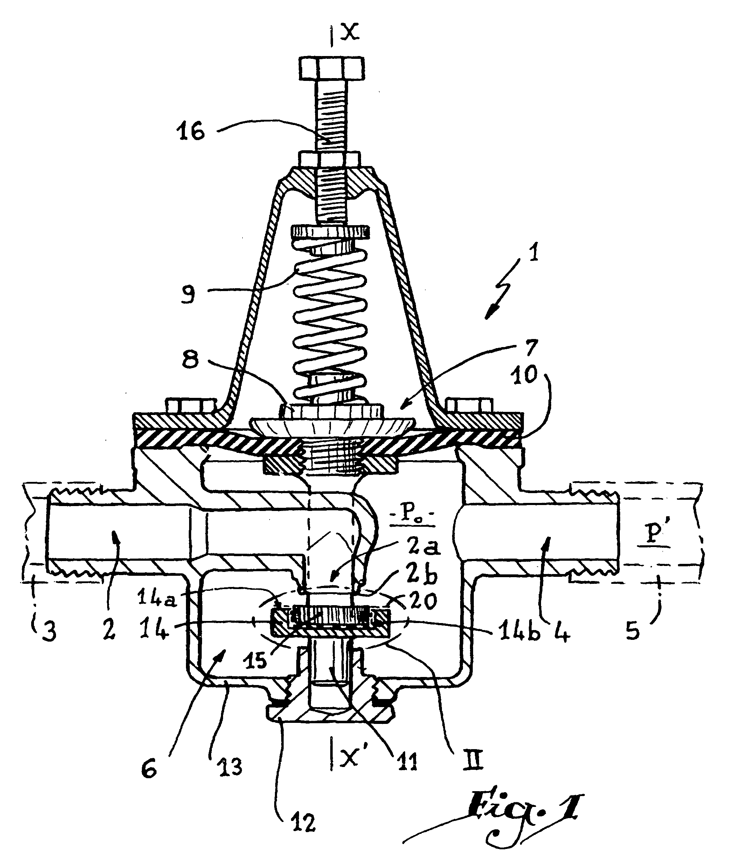

A la figure 1, un réducteur de pression 1 comprend un conduit d'admission 2 branché sur un réseau amont 3 et un conduit de sortie 4 branché sur un réseau aval 5. Le conduit 2 comprend un orifice de sortie 2a disposé à l'intérieur d'une chambre 6, de telle sorte que l'eau débouchant par l'orifice 2a est dirigée selon une direction XX' globalement perpendiculaire à l'axe des réseaux 3 et 5. Un équipage mobile 7 est également disposé dans la chambre 6 et mobile en translation selon la direction XX' sous l'effet de l'action d'une coupelle 8 commandée par un ressort 9 et d'une membrane 10 soumise à la pression $P_0$ régnant dans la chambre 6. L'équipage mobile 7 est pourvu d'une tige 11 guidée à l'intérieur d'un bouchon 12 vissé sur le corps 13 du réducteur 1. L'équipage 7 comprend un porte-clapet 14 sur lequel est monté un clapet 15 réalisé en matériau élastique, tel que par exemple en élastomère, et apte à venir en appui contre le bord 2b de l'orifice 2a.

Le fonctionnement est le suivant :

La pression de consigne dans le réseau 5 est réglée en ajustant la force exercée par le ressort 9 et la coupelle 8 sur la membrane 10 au moyen d'une vis de réglage 16. Lorsque la pression P' dans le réseau 5 est supérieure à cette valeur de consigne, la pression $P_0$, qui est sensiblement égale à P', exerce sur la membrane 10 un effort vertical dirigé vers le haut qui a tendance à soulever l'équipage mobile 7 et, donc, à rapprocher le clapet 15 du bord 2b de l'orifice 2a, de telle sorte que la section d'écoulement entre l'orifice 2a et la clapet 15 est réduite. Cette réduction de la section d'écoulement induit une diminution des pressions $P_0$ et P'.

Au contraire, lorsque la pression P' est inférieure à la valeur de consigne, la valeur $P_0$ n'est pas de nature à équilibrer l'effort exercé par le ressort 9, de sorte que le clapet 15 est éloigné de l'orifice 2a et que la section d'écoulement de l'eau est augmentée.

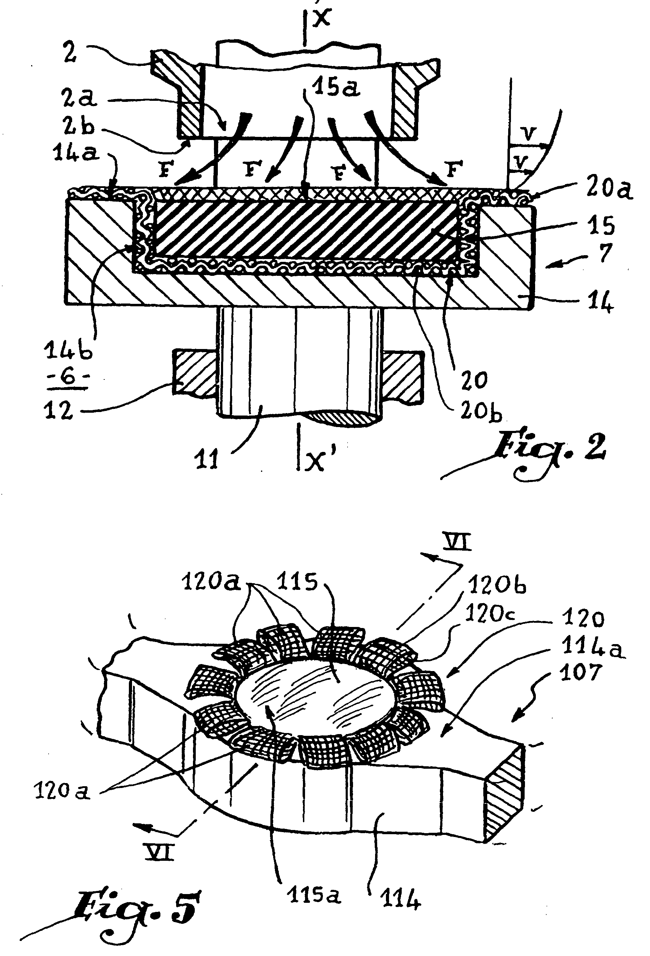

Comme il ressort plus particulièrement de la figure 2, le flux F de l'eau sortant du conduit 2 par l'orifice 2a heurte la surface supérieure 15a du clapet 15 disposée en regard de l'orifice 2a. Le flux F est ainsi divisé et se répartit de façon globalement circulaire en venant lécher une surface périphérique 14a du porte-clapet 14 qui entoure le clapet 15.

Conformément à l'invention, et comme il ressort plus clairement des figures 2 à 4, une structure en treillis 20 est prévue et comprend une zone annulaire 20a disposée sur la surface 14a, de telle sorte que le flux F s'écoulant de l'orifice 2a vient lécher la zone 20a de la structure 20. La vitesse du flux F est ainsi sensiblement diminuée par la structure 20, de telle sorte que le profil de vitesses d'écoulement V a une forme proche de la courbe représentée sur la droite de la figure 2 qui s'apparente à un profil d'écoulement laminaire. La diminution de la vitesse V au voisinage de la surface 14a et de la structure 20 résulte dans une augmentation de la pression d'écoulement au voisinage de cette surface, ce qui a pour effet de diminuer les risques de cavitation.

Ainsi, la structure 20 constitue un moyen de stabilisation et de ralentissement du flux F au voisinage de la surface 14a. Des essais pratiques ont permis de démontrer que, dans les conditions de la norme ISO 3822-3 et avec une pression amont de l'ordre de 8 bars et une pression aval de l'ordre de 2,5 bars en écoulement, la différence sonore par rapport à un échantillon de référence est supérieure de 7 décibels pour un réducteur de pression équipé de la structure en treillis 20 par rapport à un même réducteur dépourvu d'une telle structure.

On note que la partie 20a de la structure 20 visible à la figure 4 est disposée de façon substantiellement parallèle à la surface 14a, de telle sorte qu'elle est en permanence léchée par le flux F s'écoulant à travers l'orifice 2a. Ceci a pour effet que les impuretés qui pourraient s'accumuler dans la structure en treillis sont en permanence évacuées, de sorte que celle-ci remplit efficacement son rôle tout au long de la durée de vie du réducteur.

La structure 20 peut être réalisée par tissage de fils métalliques ou en matière synthétique ou dans une feuille de métal déployé. Les mailles de la structure 20 ont des dimensions de l'ordre de 0,5 mm par 0,5 mm. On a pu démontrer expérimentalement que des mailles supérieures à 1 mm ne permettent pas de freiner efficacement l'écoulement du flux F. Au contraire, des mailles inférieures à 0,1 mm ont tendance à s'encrasser, les impuretés n'étant que peu entraînées par l'écoulement du flux F, car elles sont retenues de manière trop importante à l'intérieur de la structure 20.

Comme il ressort plus particulièrement des figures 2 et 3, la structure 20 présente une zone centrale 20b destinée à être coincée au fond d'un logement 14b de réception du clapet 15 dans le porte-clapet de l'équipage mobile 14. Ainsi, la structure 20, qui s'étend sous toute la largeur du clapet 15, est fermement maintenue en position par rapport à l'équipage mobile 7 grâce à la mise en place du clapet 15. Le clapet 15 peut également être fixé sur le porte clapet 14 par une vis non représentée.

A la figure 3, la structure 20 est représentée conformée aux dimensions respectives du logement 14b et du clapet 15. Il est également possible de disposer une structure 20 en forme de disque plan au-dessus du porte-clapet 14 et d'emboutir celle-ci lors de la mise en place du clapet 15 à l'intérieur du logement 14b. On obtient un anneau de structure en treillis qui dépasse alors du logement 14b, cet anneau pouvant être rabattu sur la surface 14a de façon à former une zone annulaire 20a destinée à être léchée par le flux F.

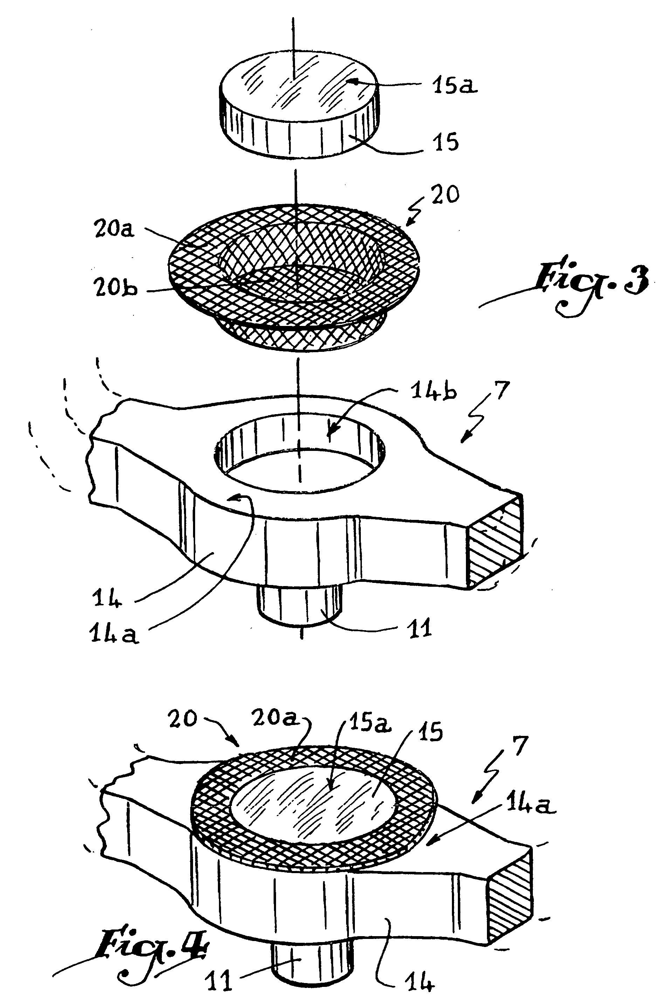

Dans le second mode de réalisation de l'invention représenté aux figures 5 et 6, les éléments analogues à ceux du mode de réalisation des figures 1 à 4 portent des références identiques augmentées de 100. Dans ce mode de réalisation, un équipage mobile 107 comprend un porte-clapet 114 qui porte un clapet 115 destiné à être déplacé en regard de l'orifice de sortie 102a d'un conduit d'admission 102, cet orifice 102a étant pourvu d'un bord 102b. La surface supérieure 115a du clapet 115 est orientée vers le bord 102b de l'orifice 102a.

Conformément à l'invention, une structure en treillis 120 est disposée autour du clapet 115 au voisinage de la surface périphérique 114a du porte-clapet 114 qui entoure le clapet 115. La structure 120 est formée de bandes 120a qui s'étendent radialement à partir du clapet 115 et sont disposées en forme de boucles, de sorte qu'elle présente deux couches superposées 120b et 120c qui sont disposées substantiellement parallèlement à la surface 114a.

Cette structure multicouche pourrait être transposée au mode de réalisation des figures 1 à 4.

Dans le mode de réalisation des figures 5 et 6, un logement 114b est prévu dans le porte-clapet 114 de l'équipage mobile 107, ce logement étant accessible par le côté du porte-clapet 114 opposé à la face 114a. Un bouchon 121 est prévu pour être vissé dans le porte-clapet 114 de façon à emprisonner le clapet 115 à l'intérieur du logement 114b. Le clapet 115 présente une collerette externe 115b destinée à venir en appui contre un épaulement 114c du logement 114b. Les bandes 120a de structure en treillis sont coincées entre le clapet 115 et l'épaulement 114c, de sorte qu'il n'est pas nécessaire de prévoir de dispositif de fixation particulier pour le maintien en position des bandes 120a.

Comme précédemment, le flux F d'eau s'écoulant par l'orifice 102a vient lécher les bandes 120a, de sorte que la vitesse tangentielle de l'écoulement F au niveau de la surface 114a est fortement réduite, voire nulle.

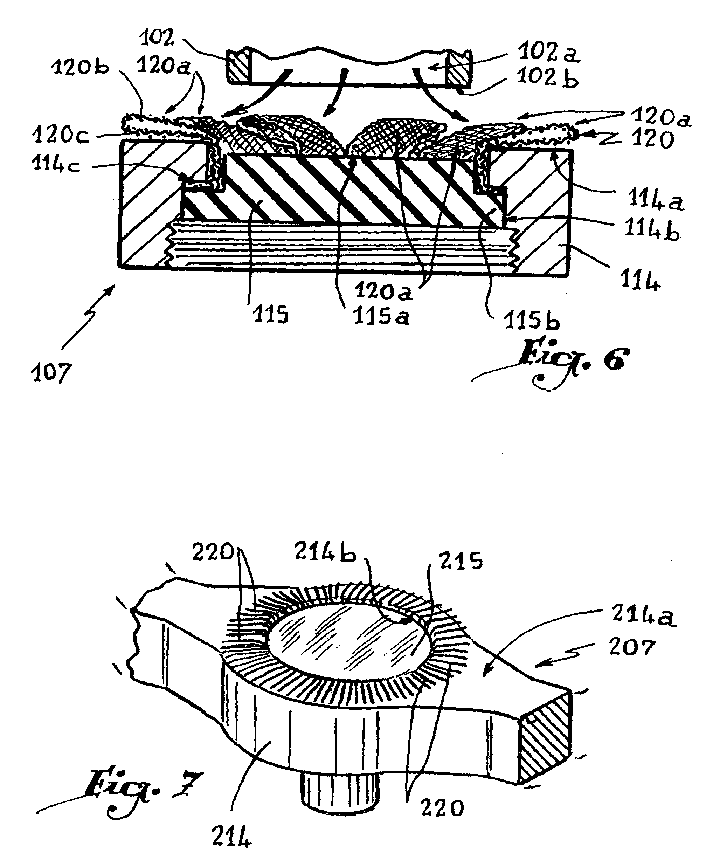

Dans le troisième mode de l'invention représenté à la figure 7, les éléments analogues à ceux du mode de réalisation des figures 1 à 4 portent des références identiques augmentées de 200. Dans ce mode de réalisation, un équipage mobile 207 comprend un porte-clapet 214 qui porte un clapet 215. Un grand nombre de fils 220 sont disposés radialement, à partir d'un logement de réception du clapet 215 dans le porte-clapet 214, sur la surface périphérique 214a du porte-clapet qui entoure le clapet 215.

Conformément à l'invention, ces fils ont pour fonction de stabiliser et de freiner l'écoulement du flux de liquide qui lèche la surface 214a. On note que les fils 220 peuvent être obtenus à partir d'une structure en treillis du type de la structure 20, cette structure étant coincée sous le clapet 215 dans son logement de réception à la manière décrite en référence au premier mode de réalisation..La partie de la structure en treillis qui dépasse du logement et repose sur la surface 214a peut être dé-tissée en retirant les fils non radiaux. Dans ce cas, les fils 220 ont une forme ondulée, résultant de leur tissage antérieur, ce qui améliore encore l'effet de freinage obtenu sur le flux en cours d'écoulement.

Ces fils peuvent être réalisés en matériau souple et conformés de telle sorte qu'ils sont orientés vers le haut en l'absence d'écoulement en formant ainsi une barrière ou un obstacle, alors qu'ils peuvent être rabattus ou couchés vers la surface 214a sous l'effet de l'écoulement.

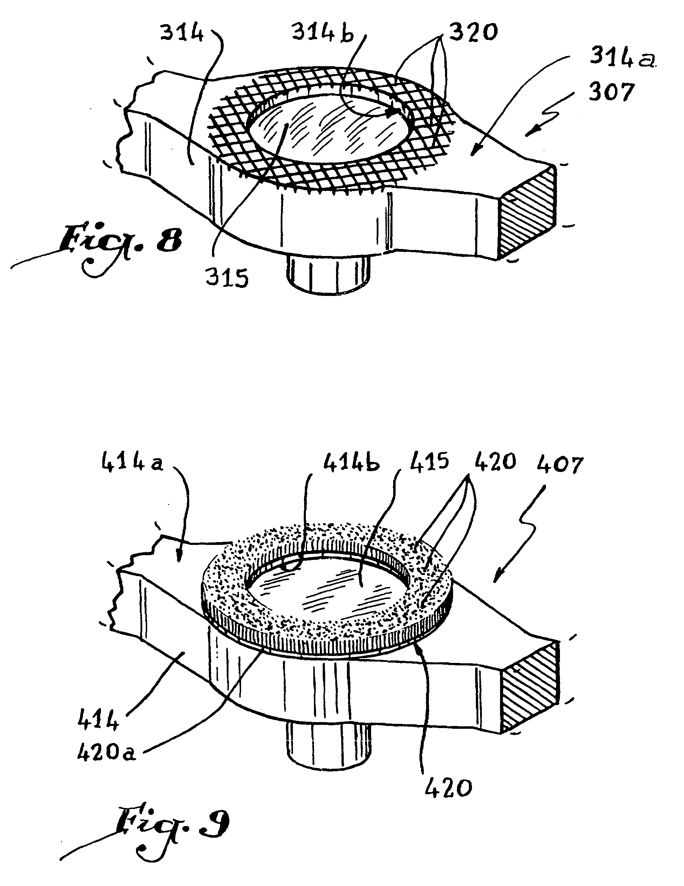

Dans le quatrième mode de réalisation de l'invention représenté à la figure 8, les éléments analogues à ceux du mode de réalisation des figures 1 à 4 portent des références identiques augmentées de 300. Dans ce mode de réalisation, un porte-clapet 314 faisant partie d'un équipage mobile 307 est pourvu d'un logement 314b de réception d'un clapet 315. La surface 314a du porte-clapet 314 disposée autour du clapet 315 est pourvue de rainures 320 obtenues par moletage. Ces rainures peuvent également être produites par fraisage, matriçage ou moletage, voire brutes de moulage, ces rainures s'étendant dans plusieurs directions sur la surface 314a. Comme les dispositifs précédents, ces rainures ont pour fonction de stabiliser et de freiner l'écoulement du flux débouchant d'un orifice de sortie disposé en regard du clapet 315.

Les rainures 320 de ce dernier mode de réalisation pourraient être associées aux structures en treillis ou aux fils des modes de réalisation précédents, ce qui permettrait d'accumuler les avantages obtenus.

Dans le cinquième mode de réalisation de l'invention représenté dans la figure 9, les éléments analogues à ceux du mode de réalisation des figures 1 à 4 portent des références identiques augmentées de 400. Dans ce mode de réalisation, un porte clapet 414 faisant partie d'un équipage mobile 407 est pourvu d'un logement 414b de réception d'un clapet 415. La surface 414a du porte-clapet 414 disposée autour du clapet 415 est équipée d'une structure 420 prévue pour être léchée par le flux d'eau dirigé vers le clapet 415. Cette structure 420 est formée d'une bande 420a disposée à plat, autour du clapet 415, sur la surface 414a et portant des fils ou poils 420b orientés selon une direction globalement perpendiculaire à la bande 420a ou à la surface 414a. Ces fils ou poils 420b constituent ainsi un ralentisseur local pour le flux de liquide au voisinage de la surface 414a.

La structure 420 peut notamment être formée d'une plaque munie de crochets ou de boucles telle que connue des systèmes de fixation amovible à boucles et crochets largement utilisés dans les domaines des vêtements de sport ou de loisirs. La bande 420 peut également être fabriquée à partir d'une pièce de tissu ou moulée en matière plastique. Les fils ou poils 422 peuvent être montés par tous moyens appropriés sur la bande 420a et notamment être obtenus par moulage avec celle-ci lorsque la structure 420 est réalisée complètement en matière plastique.

La bande 420a peut être collée sur le porte clapet 414 ou coincée sous le clapet 415 comme dans les modes de réalisation des figures 1 à 7. Plus généralement, la bande 420a peut être fixée sur le porte-clapet 414 par tous moyens appropriés.

Selon une variante, non représentée de l'invention, les fils ou poils 420b peuvent être remplacés par des picots semi-rigides ou des doigts rigides s'étendant selon une direction globalement perpendiculaire à la surface 414a.

Dans tous les cas, les fils, poils, picots ou doigts ont une hauteur suffisamment faible pour que le flux de liquide lèche leurs extrémités sans pour autant qu'ils constituent une barrière ou un filtre susceptible de s'encrasser.

**Revendications**

1. Réducteur de pression (1) pour circuit hydraulique (3, 5), comprenant un équipage mobile (7 ; 107 ; 207 ; 307 ; 407) portant un clapet (15 ; 115 ; 215 ; 315 ; 415) apte à être déplacé selon une direction axiale (XX') en regard d'un orifice de sortie (2a, 102a) d'un conduit d'admission (2, 102), **caractérisé en ce qu'**une surface périphérique (14a ; 114a ; 214a ; 314a ; 414a) dudit équipage, qui s'étend radialement autour dudit clapet, est pourvue de moyens (20 ; 120 ; 220 ; 320 ; 420) disposés au voisinage de ladite surface et prévus pour être léchés par le flux (F) de liquide pour la stabilisation et le ralentissement de ce flux de liquide au voisinage de ladite surface périphérique.

2. Réducteur de pression selon la revendication 1, **caractérisé en ce que** lesdits moyens (20 ; 120) de stabilisation et de ralentissement du flux comprennent une structure en treillis disposée de façon substantiellement parallèle à ladite surface périphérique (14a ; 114a).

3. Réducteur de pression selon la revendication 2, **caractérisé en ce que** ladite structure en treillis (20) comprend une zone annulaire (20a) substantiellement parallèle à ladite surface périphérique (14a).

4. Réducteur de pression selon la revendication 2, **caractérisé en ce que** ladite structure en treillis (120) est formée de bandes (120a) s'étendant radialement à partir dudit clapet (115).

5. Réducteur de pression selon l'une des revendications 2 à 4, **caractérisé en ce que** ladite structure en treillis (120) est formée d'au moins deux couches superposées (120b, 120c).

6. Réducteur de pression selon la revendication 1, **caractérisé en ce que** lesdits moyens de stabilisation et de ralentissement du flux comprennent des fils (220) s'étendant radialement à partir dudit clapet (215), lesdits fils étant disposés de façon substantiellement parallèle à ladite surface périphérique (214a).

7. Réducteur de pression selon la revendication 1, **caractérisé en ce que** lesdits moyens (420) de stabilisation et de ralentissement du flux (F) de liquide comprennent une bande (420a) disposée à plat sur ladite surface périphérique (414a) et portant des fils, poils (420b), picots ou doigts orientés selon une direction globalement perpendiculaire à ladite .surface périphérique.

8. Réducteur de pression selon l'une des revendications 2 à 7, **caractérisé en ce que** ladite structure en treillis (20 ; 120), lesdits fils (220) ou ladite bande (420) sont immobilisés par coincement entre ledit clapet (15 ; 115 ; 215 ; 415) et un porte-clapet (14 ; 114 ; 214 ; 414) dudit équipage mobile.

9. Réducteur de pression selon la revendication 7, **caractérisé en ce que** ladite structure en treillis (20) ou lesdits fils comprend ou comprennent une partie (20b) qui s'étend dans un logement (14b) sous toute la largeur dudit clapet.

10. Réducteur de pression selon la revendication 1, **caractérisé en ce que** lesdits moyens de stabilisation et de ralentissement comprennent des rainures (320) formées sur ladite surface périphérique (314a).

## Claims

1. A pressure reducer (1 ) for a hydraulic circuit (3, 5), comprising a mobile fitting (7; 107; 207; 307; 407) bearing a valve (15; 115; 215; 315; 415) capable of being displaced in an axial direction (XX') opposite an outlet orifice (2a, 102a) of an inlet pipe (2, 102), **characterised in that** a peripheral surface (14a; 114a; 214a; 314a; 414a) of said fitting, which extends radially around said valve, is provided with means (20; 120; 220; 320; 420) arranged in the vicinity of said surface and provided to be lapped by the flow (F) of liquid to stabilise and slow down this flow of liquid in the vicinity of said peripheral surface.

2. A pressure reducer according to Claim 1, **characterised in that** said means (20; 120) for stabilising and slowing down the flow comprise a trellis structure arranged substantially parallel to said peripheral surface (14a; 114a).

3. A pressure reducer according to Claim 2, **characterised in that** said trellis structure (20) comprises an annular zone (20a) substantially parallel to said peripheral surface (14a).

4. A pressure reducer according to Claim 2, **characterised in that** said trellis structure (120) is formed of strips (120a) extending radially from said valve (115).

5. A pressure reducer according to one of Claims 2 to 4, **characterised in that** said trellis structure (120) is formed of at least two superposed layers (120b, 120c).

6. A pressure reducer according to Claim 1, **characterised in that** said means for stabilising and slowing down the flow comprise wires (220) extending radially from said valve (215), said wires being arranged substantially parallel to said peripheral surface (214a).

7. A pressure reducer according to Claim 1, **characterised in that** said means (420) for stabilising and slowing down the flow (F) comprise a strip (420a) arranged flat on said peripheral surface (414a) and bearing wires, bristles (420b), pins or fingers oriented in an overall perpendicular direction to said peripheral surface.

8. A pressure reducer according to one of Claims 2 to 7, **characterised in that** said trellis structure (20; 120), said wires (220) or said strip (420) are immobilised by wedging between said valve (15; 115; 215; 425) and a valve holder (14; 114; 214; 414) of said mobile fitting.

9. A pressure reducer according to Claim 7, **characterised in that** said trellis structure (20) or said wires comprises/comprise a part (20b) which extends in a housing (14b) beneath the entire width of said valve.

10. A pressure reducer according to Claim 1, **characterised in that** said stabilising and slowing-down means comprise grooves (320) formed on said peripheral surface (314a).

## Patentansprüche

1. Druckminderer (1) für einen Hydraulikkreis (3, 5) mit einem ein Ventil (15; 115; 215; 315; 415) tragenden beweglichen Teil (7; 107; 207; 307; 407), das entsprechend einer axialen Richtung (XX') gegenüberliegend zu einer Ausgangsöffnung (2a, 102a) eines Einlaufkanals (2, 102) verschiebbar ist, **dadurch gekennzeichnet, dass** eine Umfangsfläche (14a; 114a; 214a; 314a; 414a) des Teils, die sich radial um das Ventil herum erstreckt, mit Mitteln (20; 120; 220; 320; 420) versehen ist, die benachbart zu der genannten Fläche angeordnet sind und vorgesehen sind, um von dem Flüssigkeitsstrom (F) für eine Stabilisierung und Verlangsamung dieses Flüssigkeitsstroms in der Nähe der Umfangsfläche bestrichen zu werden.

2. Druckminderer nach Anspruch 1, **dadurch gekennzeichnet, dass** die Mittel (20; 120) zur Stabilisierung und Verlangsamung des Stroms eine Geflechtstruktur umfassen, die im Wesentlichen parallel zu der Umfangsfläche (14a; 114a) angeordnet ist.

3. Druckminderer nach Anspruch 2, **dadurch gekennzeichnet, dass** die Geflechtstruktur (20) eine im Wesentlichen parallel zu der Umfangsfläche (14a) angeordnete Ringzone (20a) umfasst.

4. Druckminderer nach Anspruch 2, **dadurch gekennzeichnet, dass** die Geflechtstruktur (120) aus Bändern (120a) gebildet ist, die sich radial vom Ventil (115) erstreckt.

5. Druckminderer nach einem der Ansprüche 2 bis 4, **dadurch gekennzeichnet, dass** die Geflechtstruktur (120) aus mindestens zwei übereinander liegenden Schichten (120b; 120c) gebildet wird.

6. Druckminderer nach Anspruch 1, **dadurch gekennzeichnet, dass** die Mittel zur Stabilisierung und Verlangsamung des Stroms Fäden (220) umfassen, die sich radial vom Ventil (215) erstrecken, wobei die Fäden im Wesentlichen parallel zu der Umfangsfläche (214a) angeordnet sind.

7. Druckminderer nach Anspruch 1, **dadurch gekennzeichnet, dass** die Mittel (420) zur Stabilisierung und Verlangsamung des Flüssigkeitsstroms ( F) ein Band (420a) umfassen, das flach auf der Umfangsfläche (414a) angeordnet ist und Fäden, Haare (420b), Zähne oder Finger trägt, die entsprechend einer im Allgemeinen senkrecht zur Umfangsfläche liegenden Richtung ausgerichtet sind.

8. Druckminderer nach einem der Ansprüche 2 bis 7, **dadurch gekennzeichnet, dass** die Geflechtstruktur (20; 120), die Fäden (220) oder das Band (420) durch Klemmen zwischen dem Ventil (15; 115; 215; 415) und einem Ventilträger (14; 114; 214; 414) des beweglichen Teils festgelegt sind.

9. Druckminderer nach Anspruch 7, **dadurch gekennzeichnet, dass** die Geflechtstruktur (20) oder die Fäden einen Bereich (20b) umfassen, der sich in einer Aufnahme (14b) unter der gesamten Breite des Ventils erstreckt.

10. Druckminderer nach Anspruch 1, **dadurch gekennzeichnet, dass** die Mittel zur Stabilisierung und Verlangsamung Nuten (320) umfassen, die auf der Umfangsfläche (314a) ausgebildet sind.

*Fig. 1*

*Fig. 2*

*Fig. 5*

Fig. 3

Fig. 4

Fig. 6

Fig. 7

Fig. 8

Fig. 9